# EUROPÄISCHE PATENTSCHRIFT

(11) **EP 3 212 579 B1**
(45) Veröffentlichungstag und Bekanntmachung des Hinweises auf die Patenterteilung: **18.09.2019**
(21) Anmeldenummer: 15801336.7
(22) Anmeldetag: 29.10.2015
(51) Int. Cl.: C02F 1/461, C02F 1/467

(54) **STABFÖRMIGE ELEKTROLYSEVORRICHTUNG**
ROD-SHAPED ELECTROLYSIS DEVICE
DISPOSITIF D'ÉLECTROLYSE EN FORME DE TIGE

(30) Priorität: 30.10.2014 DE 102014015935
(43) Veröffentlichungstag der Anmeldung: 06.09.2017
(73) Patentinhaber: Römer, Heinz G., 40789 Monheim (DE)
(72) Erfinder: Römer, Heinz G., 40789 Monheim (DE)
(74) Vertreter: Demski, Siegfried
(86) Internationale Anmeldenummer: PCT/EP2015/075123
(87) Internationale Veröffentlichungsnummer: WO 2016/066746

(56) Entgegenhaltungen:
- WO-A1-2011/052758
- DE-B4-102009 011 108
- DE-B4-102010 044 315
- US-B1- 6 261 464
- US-B1- 6 558 537
- Innovatec Gerätetechnik: "Water-Pen. The solution for water-borne germs", , 6. Dezember 2012 (2012-12-06), XP055243338, Gefunden im Internet: URL:http://www.innovatec-rheinbach.de/WATE R-PEN_Prospekt_english.pdf [gefunden am 2016-01-20]

## Beschreibung

Die Erfindung betrifft eine stabförmige Elektrolysevorrichtung mit einem elektrisch leitfähigen Gehäuse, wobei in dem Gehäuse ein Aufnahmeraum für zumindest eine Spannungsquelle in Form eines Akkumulators und eine elektronische Steuereinheit ausgebildet ist, welcher flüssigkeitsdicht von einem in dem Gehäuse ausgebildeten Elektrodenraum separiert ist, wobei sich in dem Elektrodenraum eine Elektrode erstreckt und wobei in dem Gehäuse im Bereich des Elektrodenraums zumindest eine Öffnung ausgebildet ist.

Derartige Elektrolysevorrichtungen sind aus dem Stand der Technik bekannt. Beispielsweise aus dem deutschen Patent DE 10 2009 011 108 B4, DE 10 2010 044 315 B4, dem US-Patent 6,261,464 B1 und dem US Patent 6,524,475 B1.

Aus der DE 10 2010 044 315 B4 ist eine Elektrolysezelle in kompakter Bauform bekannt, die ebenfalls stabförmig ausgebildet ist. Innerhalb des Gehäuses ist hierbei ein Spannungsquelle und eine elektronische Steuereinheit ausgebildet. Zum Laden der Spannungsquelle besitzt die Elektrolysezelle in der oberen Stirnfläche eine Aufnahmebuchse.

Aus dem US-Patent 6,261,464 B1 ist ebenfalls eine Elektrolysezelle in kompakter Bauform bekannt, bei der in das untere stabförmige Ende zur Aufnahme einer Spannungsquelle, insbesondere einer Batteriezelle vorgesehen ist.

Aus der DE 10 2009 011 108 B4 ist eine stabförmige Elektrolysezelle bekannt, die im oberen Bereich zur Aufnahme von Knopfzellen vorgesehen ist und im weiteren Bereich ein in sich geschlossenes Gehäuse mit Bohrungen aufweist, durch die das Wasser im Bereich der Elektroden eintreten kann.

Der genannte Stand der Technik betrifft transportable Elektrolysevorrichtungen etwa in Form eines Kugelschreibers oder Füllers, welche aufgrund ihrer geringen Größe leicht mitgeführt werden können und so auch in nicht urbanen Gebieten weit abseits jeder Zivilisation, etwa der sibirischen Steppe oder den Savannen Afrikas zum Einsatz kommen können. Solche Elektrolysevorrichtungen dienen der Desinfektion von Wasser, sodass vorhandenes Rohwasser desinfiziert und anschließend ohne Infektionsrisiken getrunken werden kann. Bei dem Elektrolyseprozess entsteht Natriumhypochlorit, welches die desinfizierende Wirkung entfaltet. In der Regel reicht das natürlich im Wasser vorkommende Natriumchlorid aus, um eine für die Desinfektion des Rohwassers ausreichende Menge an Natriumhypochlorit aus Wasser und seinen Dissoziationsprodukten OH⁻ und H⁺ zu erzeugen. Bezüglich des Reaktionsmechanismus wird auf den genannten Stand der Technik verwiesen, in welchem die Erzeugung von Natriumhypochlorit in Rohwasser mithilfe zweier Elektroden, zwischen denen eine elektrische Potentialdifferenz besteht, geschildert ist.

Gerade die aktuelle (2014) Ebola-Epidemie dokumentiert eindringlich die Notwendigkeit, dass sich auch Menschen mit bescheidenen finanziellen Mitteln mit keimfreiem Trinkwasser oder Wasser zum Waschen des Körpers, insbesondere der Hände, oder Utensilien zur Nahrungsaufnahme, wie Besteck oder Kochgeschirr, versorgen können müssen, um eine solche Epidemie einzudämmen. Die Chlorung durch Zugabe von Chlorgas, Chlordioxid oder Natriumhypochlorit zur Desinfektion von Wasser ist durch die notwendige Bereitstellung der genannten Chemikalien teurer als die Desinfektion mittels des während eines Elektrolyseprozesses erzeugten Natriumhypochlorits, bei welchem im Regelfall aufgrund des natürlichen NaCI-Gehaltes des Wassers keine separaten Chemikalien erforderlich sind, und insbesondere bedarf es keines kontinuierlichen Nachschubs dieser Chemikalien.

Aufgabe der vorliegenden Erfindung ist es, eine weiter verbesserte Ausgestaltung solcher transportablen Elektrolysevorrichtungen anzugeben, welche gegenüber den aus dem Stand der Technik bekannten Elektrolysevorrichtungen weitere Verbesserungen aufweist.

Zur Lösung der Aufgabe ist vorgesehen, dass das Gehäuse eine Aufnahmebuchse in einer Stirnfläche des Gehäuses aufweist, welche elektrisch sowohl mit dem Gehäuse als auch der Elektrode verbunden ist, wobei die Elektrode und die Aufnahmebuchse im unteren Bereich der Elektrolysevorrichtung angeordnet sind und die stabförmige Elektrode eine halbkugelige Stirnfläche aufweist, wobei die elektronische Steuereinheit einen Datenspeicher umfasst und die Aufnahmebuchse elektrisch mit dem Datenspeicher derart verbunden ist, dass der Datenspeicher über die Aufnahmebuchse auslesbar ist, wobei in dem Datenspeicher Betriebsdaten der Elektrolysevorrichtung abgespeichert sind. Weitere vorteilhafte Ausgestaltungen der Erfindung ergeben sich aus den Unteransprüchen.

Mithilfe der Aufnahmebuchse kann die erfindungsgemäße Elektrolysevorrichtung mit einer entsprechenden Ladestation, welche ihrerseits eine korrespondierende Aufnahmebuchse oder Ladekabel mit Steckkontakt aufweist, verbunden werden. Ebenso kann eine Messung der Restspannung der in dem Aufnahmeraum angeordneten Spannungsquelle(n) über die Aufnahmebuchse erfolgen. Die Aufnahmebuchse der Elektrolysevorrichtung ist dabei einerseits elektrisch mit dem Gehäuse verbunden und andererseits mit der Elektrode in dem Elektrodenraum. Das Gehäuse dient im Bereich des Elektrodenraumes aufgrund seiner elektrischen Leitfähigkeit als erste Elektrode und die Elektrode im Elektrodenraum als zweite Elektrode, wobei zwischen beiden mittels in dem Aufnahmeraum des Gehäuses anzuordnenden Spannungsquellen eine elektrische Potentialdifferenz, das heißt eine elektrische Spannung, angelegt wird. Durch die elektrische Verbindung der Aufnahmebuchse einerseits mit der Elektrode im Elektrodenraum und andererseits mit dem Gehäuse kann ein in dem Aufnahmeraum angeordneter Akkumulator aufgeladen werden.

Zur Vermeidung von Korrosion der in der Aufnahmebuchse vorhandenen Kontakte bestehen diese bevorzugt aus rostfreiem Edelstahl oder einer Edelmetallbeschichtung. Das Gehäuse besteht ebenfalls bevorzugt aus einem rostfreien Edelstahl.

Das Gehäuse kann im Bereich des Elektrodenraums mehrere Öffnungen aufweisen, welche auf dem Gehäuse entlang seines Umfangs und/oder in Erstreckungsrichtung des Elektrodenraums verteilt angeordnet sind.

Die erfindungsgemäße Elektrolysevorrichtung kann aufgrund ihrer kompakten Bauweise wie ein Stift transportiert werden, beispielsweise in einer Westen- oder Oberarmtasche. Die einfache konstruktive Ausführung ermöglicht eine kostengünstige Herstellung der erfindungsgemäßen Elektrolysevorrichtung, sodass diese bei vergleichsweise geringen Kosten in großer Zahl zur Verfügung gestellt werden kann, beispielsweise in Entwicklungsländern oder in Regionen, in welchen es zu Überschwemmungen gekommen ist und daher die Versorgung der betroffenen Bevölkerung mit Trinkwasser oder Wasser zum Waschen des Körpers, insbesondere der Hände, oder Utensilien zur Nahrungsaufnahme, wie Besteck oder Kochgeschirr, gefährdet ist.

Die Elektrolysevorrichtung kann derart ausgebildet sein, dass die elektronische Steuereinheit einen Datenspeicher umfasst und die Aufnahmebuchse elektrisch mit dem Datenspeicher derart verbunden ist, dass der Datenspeicher über die Aufnahmebuchse auslesbar ist, wobei in dem Datenspeicher Betriebsdaten der Elektrolysevorrichtung abgespeichert werden. Unter den Betriebsdaten werden hierbei alle Daten verstanden, welche den Betrieb der Vorrichtung dokumentieren, wie beispielsweise die Aktivierungs- und Deaktivierungszeitpunkte, die Aktivierungsdauer, den Ladezustand der Spannungsquelle bei Aktivierung und Deaktivierung, die Stärke der über den Bewegungssensor detektierten Erschütterung, die von dem Mikroprozessor berechneten Leitwerte, von dem Mikroprozessor generierte Fehlermeldungen, den Eigentümer einer Elektrolysevorrichtung identifizierende Daten, etc. Ferner kann die elektronische Steuereinheit programmierbar ausgebildet sein. Es kann aber auch ein Programm zum Betrieb der Elektrolysevorrichtung auf dem Datenspeicher abgespeichert werden.

In weiterer Ausgestaltung der Erfindung kann vorgesehen sein, dass die Aufnahmebuchse an einer Stirnfläche des Gehäuses angeordnet ist, wodurch die erfindungsgemäße Elektrolysevorrichtung aufrecht auf eine korrespondierende Aufnahmebuchse einer Ladestation gestellt werden kann. In dieser Ausführungsform wird trotz der Integration einer Aufnahmebuchse in die Elektrolysevorrichtung eine konstruktive Einfachheit bewahrt. Auch die Ladestation kann entsprechend einfach realisiert werden, da die Elektrolysevorrichtung nur auf die korrespondierende Aufnahmebuchse des Ladegerätes gestellt werden muss.

Die Elektrode in dem Elektrodenraum ist in einer bevorzugten Ausgestaltung der erfindungsgemäßen Elektrolysevorrichtung stabförmig ausgebildet und weist eine halbkugelförmige Stirnfläche auf. Die halbkugelförmige Stirnfläche bewirkt zunächst eine Vergrößerung der Elektrodenoberfläche, sodass bei vorgegebener Stromstärke pro Zeiteinheit eine größere Menge des desinfizierenden Natriumhypochlorits erzeugt wird. Ferner werden Inhomogenitäten des elektrischen Feldes, das heißt eine lokal höhere Dichte elektrischer Feldlinien, zu welchen es an den Kanten einer flachen Stirnfläche einer zylindrischen Elektrode kommt, vermieden, sodass die Elektrode hinsichtlich einer etwa vorhandenen Beschichtung oder einer sich ereignenden Kalkablagerung gleichmäßiger belastet wird, wodurch ihre Effizienz und Lebensdauer gesteigert wird.

Ferner kann vorgesehen sein, dass in dem Elektrodenraum zwischen Gehäuse und Elektrode ein Dichtkörper angeordnet ist, welcher sich über einen Teil des Aufnahmeraums und/oder Elektrodenraumes erstreckt. Durch einen Dichtkörper kann der Aufnahmeraum einfach von dem Elektrodenraum flüssigkeitsdicht separiert werden, wobei die Separation einfach durch das Einstecken des Dichtkörpers in das Gehäuse realisiert ist. Ein solcher Dichtkörper kann insbesondere schnell und kostengünstig ausgetauscht werden, sofern eine Undichtigkeit zu befürchten oder bereits eingetreten ist. Im Falle eines sich in dem Elektrodenraum erstreckenden Dichtkörpers wird der aktive Bereich der Elektrode auf den Bereich eingeschränkt, welcher jenseits des Isolierkörpers gelegen ist, weil sich nur dort Feldlinien zwischen dem Gehäuse und der Elektrode im Elektrodenraum ausbilden können.

In weiterer Ausgestaltung der erfindungsgemäßen Elektrolysevorrichtung kann vorgesehen sein, dass in dem Aufnahmeraum zumindest ein Leuchtmittel angeordnet ist und sich zumindest ein Lichtleiter von dem Aufnahmeraum in den Elektrodenraum erstreckt, wobei der Lichtleiter einenends derart in dem Aufnahmeraum angeordnet ist, dass das von dem Leuchtmittel abgestrahlte Licht in den Lichtleiter eintritt. Bei dieser Ausgestaltung ist zumindest ein Leuchtmittel in dem Aufnahmeraum vorhanden, wobei das von ihm abgestrahlte Licht in den Elektrodenraum über Lichtleiter geführt wird. Durch diese Maßnahme kann ein stattfindender Elektrolyseprozess mit bloßem Auge sichtbar gemacht werden, da bei dem Elektrolyseprozess stets Wasserstoffgas (H₂) entsteht, welches aus der zumindest einen Öffnung des Gehäuses im Bereich des Elektrodenraumes austritt und das in den Elektrodenraum eintretende Licht des Leuchtmittels an den Wasserstoffbläschen reflektiert wird. Bei den Leuchtmitteln kann es sich um Leuchtdioden handeln, was aufgrund des geringen Stromverbrauchs entsprechend ausgewählter Leuchtdioden bevorzugt wird. Die Leuchtmittel können verschiedenfarbiges Licht abstrahlen und verschiedene Betriebszustände der erfindungsgemäßen Elektrolysevorrichtung anzeigen. So kann beispielsweise vorgesehen sein, dass grünes Licht einen ausreichenden Ladezustand der Spannungsquelle, gelbes Licht einen geringen Ladezustand der Spannungsquelle und rotes Licht einen für den Elektrolyseprozess nicht mehr ausreichenden Ladezustand der Spannungsquelle anzeigt. Bei dem Lichtleiter kann es sich zumindest um eine Glasfaser oder um zumindest ein Glasfaserbündel handeln, welche einenends derart in dem Aufnahmeraum angeordnet sind, dass das von dem Leuchtmittel abgestrahlte Licht in die Glasfaser oder das Glasfaserbündel eintritt. Der Lichtleiter kann ferner anderenends in den Elektrodenraum bis zu der zumindest einen Öffnung geführt sein, sodass das Licht aus dem Lichtleiter in unmittelbarer Nähe der Öffnung des Gehäuses im Bereich des Elektrodenraumes austritt und damit grade dort, wo sich die Wasserstoffbläschen ihren Weg bis zu der Öffnung bahnen. Dadurch ist ein fortschreitender Elektrolyseprozess auch bei relativ geringer Lichtleistung mit bloßem Auge beobachtbar. Der Lichtleiter kann sich durch den Dichtkörper erstrecken, wobei ein entsprechender Kanal in dem Dichtkörper ausgebildet ist, sodass der Isolierkörper oder Dichtkörper zugleich eine schützende Ummantelung für den Lichtleiter ist und eine Beschädigung desselben vermieden wird.

In weiterer Ausgestaltung kann vorgesehen sein, dass die elektronische Steuereinheit einen Zeitschalter aufweist, wobei ein Magnetfeldsensor vorhanden ist und der Zeitschalter durch ein externes Magnetfeld aktivierbar ist, und/oder wobei ein Bewegungssensor vorhanden ist und der Zeitschalter durch eine von dem Bewegungssensor detektierte Erschütterung des Gehäuses aktivierbar ist. Diese Ausgestaltung weist den besonderen Vorteil auf, dass die Schaltelektronik (elektronische Steuereinheit) vollständig in das Gehäuse integriert ist und nicht über Bedienelemente wie Knöpfe, welche sich aus dem Gehäuse erstrecken, bedient wird. Daraus ergeben sich eine Reihe von Vorteilen. Zum Ersten muss das Gehäuse keine besonderen Durchbrüche für Bedienelemente aufweisen, welche die Herstellung des Gehäuses aufwändiger gestalten würden. Zum Zweiten würden gerade durch solche Durchbrüche für Bedienelemente Staub und anderer Schmutz in das Gehäuseinnere eindringen und mit der Zeit eventuell zu einer Beeinträchtigung der elektronischen Steuereinheit oder zu einer ungewünschten Absorption oder Streuung des von dem zumindest einen Leuchtmittel - sofern ein solches vorhanden ist - emittierten Lichtes führen. Zum Dritten ist die Montage und Demontage der einzelnen Bestandteile der erfindungsgemäßen Elektrolysevorrichtung, das heißt Gehäuse, elektronische Steuereinheit, Elektrode, Aufnahmebuchse und gegebenenfalls Dichtkörper besonders einfach, wenn auf durch das Gehäuse ragende Bedienelemente verzichtet wird. Es kann weiter vorgesehen sein, dass eine Zeitspanne als Vielfaches eines Zeitintervalls durch wiederholtes Heranführen eines externen Magnetfeldes an das Gehäuse und/oder durch eine wiederholte Erschütterung des Gehäuses festlegbar ist, wobei das Vielfache gleich der Anzahl an Wiederholungen ist. Bei dieser Ausgestaltung ist ein Zeitschalter in die elektronische Steuereinheit integriert, welcher mittels eines externen Magnetfeldes oder Erschütterung des Gehäuses bedient wird. Das Zeitintervall ist dabei von der elektronischen Steuereinheit vorgegeben und stellt die kürzeste Zeitspanne dar, in welchem Fall das Vielfache gleich Eins ist. Die Elektrolyse findet anschließend während der sich aus dem Zeitintervall und dem Vielfachen ergebenden Zeitspanne statt. Hierdurch wird es möglich, die Zeitspanne mit der Menge an zu desinfizierendem Wasser zu korrelieren.

Dies kann zum Beispiel derart erfolgen, dass für eine ausreichende Desinfektion von n Litern Rohwasser n Wiederholungen (Heranführen eines externen Magnetfeldes oder Erschütterung des Gehäuses) erforderlich sind.

Ferner kann vorgesehen sein, dass die elektronische Steuereinheit einen Strom- und Spannungsregler umfasst, mittels welchem die elektrische Spannung zwischen der Elektrode und dem Gehäuse und die zwischen beiden fließende Stromstärke auf unterschiedliche Werte einstellbar ist. Bevorzugt erfolgt dabei eine Einstellung der Spannung auf 5 V oder 6,5 V mit einer Genauigkeit von ± 2 % und der Stromstärke auf einen Wert zwischen 40 mA und 460 mA bei 5 V oder 40 mA und 350 mA bei 6,5 V.

Dabei kann vorgesehen sein, dass der Strom- und Spannungsregler einen MOSFET (Metal Oxide Field Effect Transistor) aufweist, mittels welchem die Stromstärke zwischen dem Gehäuse und der Elektrode einstellbar ist, wobei die Einstellung bevorzugt mit einer Genauigkeit von ± 10 % erfolgt. Der MOSFET kann einen Ruhestrom von 5 µA und einen Innenwiderstand von 0,06 Ω aufweisen. Er kann zusätzlich überspannungsfest, kurzschlussfest und bei Überhitzung abschaltbar sein.

Es kann weiter vorgesehen sein, dass die elektronische Steuereinheit einen Mikroprozessor umfasst, welcher eine Berechnung des Leitwertes durchführt und abhängig von dem berechneten Leitwert die Spannung und die Stromstärke zwischen dem Gehäuse und der Elektrode einstellt. Dabei wird bei einer bestimmten Spannung mittels eines Messwiderstandes die Stromstärke zwischen der Elektrode und dem Gehäuse gemessen. Aus dem Wertepaar (Spannung U, Stromstärke I) berechnet der Mikroprozessor dann den Leitwert G des Wassers, in welches der Elektrodenraum getaucht ist (G=1/R=I/U; R ohmscher Widerstand).

Mithilfe des berechneten Leitwertes kann die Leitfähigkeit des zu desinfizierenden Rohwassers ermittelt werden und damit ein Rückschluss auf die Salzkonzentration gezogen werden. Bei einer geringen Salzkonzentration kann durch die elektronische Steuereinheit bei gleicher Stromstärke ein größeres Zeitintervall vorgegeben werden, als bei einer höheren Salzkonzentration, da dann bei der gleichen Menge Rohwasser mehr Zeit erforderlich ist, bis eine ausreichende Menge an Natriumhypochlorit erzeugt wird. Alternativ kann bei einem gleichen Zeitintervall bei einer geringeren Salzkonzentration eine größere Stromstärke vorgegeben werden, als bei einer größeren Salzkonzentration. Dazu kann in dem Datenspeicher eine Wertetabelle (Zeitintervall | Stromstärke | Leitwert) abgespeichert sein, auf welche die elektronische Steuereinheit zugreift.

Der genannte Mikroprozessor kann auch - zusammen mit entsprechenden Sensoren (Magnetfeldsensor, Bewegungssensor) - als Zeitschalter fungieren.

Bei dem Mikroprozessor kann es sich um einen 16-Bit-Controller mit 8 kB ROM (Read Only Memory), 1 kB RAM (Random Access Memory) und einer Taktfrequenz von 8 MHz handeln, welcher im Betrieb nur 640 µA benötigt.

In einer Ausgestaltung der erfindungsgemäßen Elektrolysevorrichtung weist diese einen akustischen Signalgeber auf, welcher auf von der elektronischen Steuereinheit detektierte Fehlfunktionen durch eine akustische Fehlermeldung aufmerksam macht, beispielsweise in Form eines einfachen Tones mit einer Frequenz von 4 KHz und einer Lautstärke von 73 dB bei einer Entfernung von 10 cm. Die Fehlermeldung kann mit den von den Leuchtmitteln optisch angezeigten Betriebszuständen (s.o.) korreliert werden, sodass zusätzlich zu den optischen Signalen akustische erzeugt werden. Der akustische Signalgeber kann von dem Mikroprozessor ausgelöst werden.

Die Erfindung wird im Weiteren anhand der Figuren näher erläutert.

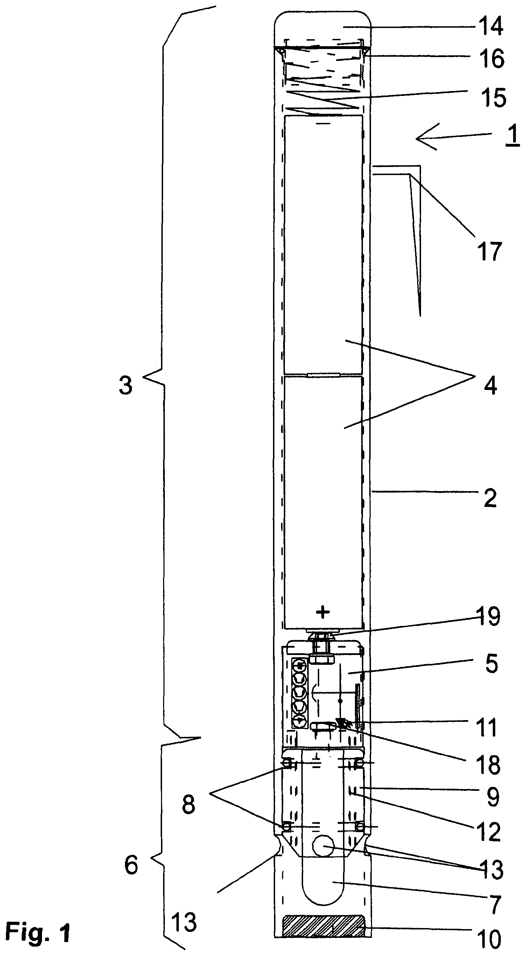

Es zeigt
- Fig. 1: eine Querschnittsansicht einer ersten Ausführungsform der erfindungsgemäßen Elektrolysevorrichtung.

Figur 1 zeigt eine Querschnittsansicht einer ersten Ausführungsform einer erfindungsgemäßen Elektrolysevorrichtung 1 mit einem stabförmigen Gehäuse 2. In dem Gehäuse 2 ist ein Aufnahmeraum 3 für zumindest eine Spannungsquelle 4 und die elektronische Steuereinheit 5 und ein Elektrodenraum 6 ausgebildet. In dem Elektrodenraum 6 ist eine Elektrode 7 angeordnet, welche eine halbkugelförmige Stirnfläche aufweist. Der Elektrodenraum 6 ist von dem Aufnahmeraum 3 durch einen Dichtkörper 9 flüssigkeitsdicht separiert, wobei sich die Elektrode 7 durch den Dichtkörper 9 erstreckt. Die Umfangsfläche des Dichtkörpers 9 weist zwei sich über seinen gesamten Umfang erstreckende Vertiefungen auf, in welchen jeweils ein Dichtungsring 8 angeordnet ist. An einer Stirnfläche des Gehäuses 2 ist eine Aufnahmebuchse 10 angeordnet, über welche die Aufladung der in dem Aufnahmeraum 3 angeordneten Spannungsquelle 4, sofern es sich dabei um einen Akkumulator handelt, das Messen der Restspannung der Spannungsquelle 4 und - da die elektronische Steuereinheit 5 einen elektronischen Datenspeicher umfasst - das Auslesen des Datenspeichers möglich ist. In dem Aufnahmeraum 3 ist ferner eine Leuchtdiode 11 angeordnet, welche in diesem Fall in die elektronische Steuereinheit 5 integriert ist. Mehrere Lichtleiter 12 erstrecken sich von dem Aufnahmeraum 3 in den Elektrodenraum, sodass der Fortgang der Elektrolyse mit bloßem Auge beobachtet werden kann, da das Licht der Leuchtdiode 11 über die Lichtleiter 12 in den Elektrodenraum 6 geleitet und dort an den während des Elektrolysevorganges entstehenden Wasserstoffbläschen reflektiert wird. Im Bereich des Elektrodenraumes 6 weist das Gehäuse 2 mehrere Öffnungen 13 auf, welche bei dieser Ausführungsform entlang des Umfangs des Gehäuses 2 verteilt angeordnet sind. Die der Aufnahmebuchse 10 abgewandte Stirnfläche des Gehäuses 2 ist mit einer Schraubkappe 14 verschlossen. Die Schraubkappe 14 weist eine Feder 15 auf, mittels welcher der Kontakt der Spannungsquelle 4 gegen den Kontakt der elektronischen Steuereinheit 5 gedrückt wird, um so eine auch bei Erschütterungen der Elektrolysevorrichtung 1 zuverlässige Kontaktierung zu ermöglichen. Zwischen der Schraubkappe 14 und der dieser zugewandten Stirnfläche des Gehäuses 2 ist eine Dichtungsring 16 angeordnet, sodass kein Wasser in den Aufnahmeraum 3 eindringen kann. An dem Gehäuse 2 ist ferner ein Bügel 17 befestigt, mittels dessen Hilfe die Elektrolysevorrichtung 1 beispielsweise an einem Wassergefäß befestigt werden kann.

Die elektronische Steuereinheit 5 umfasst einen Zeitschalter, welcher durch das Heranführen eines externen Magnetfeldes an das Gehäuse 2 oder durch mechanische Erschütterung des Gehäuses 2 aktiviert werden kann.

Die elektronische Steuereinheit 5 ist mit der Elektrode 7 über eine Schraube 18 verbunden, wodurch eine elektrische Verbindung zwischen der elektronischen Steuereinheit 5 und der Elektrode 7 hergestellt ist. Die Kontaktierung der in dem Aufnahmeraum 3 angeordneten Spannungsquelle 4 erfolgt ebenfalls mittels einer Schraube 19. Diese Ausführungsform der erfindungsgemäßen Elektrolysevorrichtung 1 wurde bewusst so gewählt, dass die Herstellung der Elektrolysevorrichtung 1 möglichst einfach und damit kostengünstig ist.

### Bezugszeichenliste

- 1: Elektrolysevorrichtung
- 2: Gehäuse
- 3: Aufnahmeraum
- 4: Spannungsquelle
- 5: elektronische Steuereinheit
- 6: Elektrodenraum
- 7: Elektrode
- 8: Dichtungsring
- 9: Dichtkörper
- 10: Aufnahmebuchse
- 11: Leuchtdiode
- 12: Lichtleiter
- 13: Öffnung
- 14: Schraubkappe
- 15: Feder
- 16: Dichtungsring
- 17: Bügel
- 18: Schraube
- 19: Schraube

## Patentansprüche

1. Stabförmige Elektrolysevorrichtung (1) mit einem elektrisch leitfähigen Gehäuse (2), wobei in dem Gehäuse (2) ein Aufnahmeraum (3) für zumindest eine Spannungsquelle (4) in Form eines Akkumulators und eine elektronische Steuereinheit (5) ausgebildet ist, welcher flüssigkeitsdicht von einem in dem Gehäuse (2) ausgebildeten Elektrodenraum (6) separiert ist, wobei sich in dem Elektrodenraum (6) eine Elektrode (7) erstreckt und wobei in dem Gehäuse (2) im Bereich des Elektrodenraums (6) zumindest eine Öffnung (13) ausgebildet ist,
**dadurch gekennzeichnet,**
**dass** das Gehäuse (2) eine Aufnahmebuchse (10) in einer Stirnfläche des Gehäuses (2) aufweist, welche elektrisch sowohl mit dem Gehäuse (2) als auch der Elektrode (7) verbunden ist, wobei die Elektrode (7) und die Aufnahmebuchse (10) im unteren Bereich der Elektrolysevorrichtung (1) angeordnet sind und die stabförmige Elektrode (7) eine halbkugelige Stirnfläche aufweist, wobei die elektronische Steuereinheit (5) einen Datenspeicher umfasst und die Aufnahmebuchse (10) elektrisch mit dem Datenspeicher derart verbunden ist, dass der Datenspeicher über die Aufnahmebuchse (10) auslesbar ist, wobei in dem Datenspeicher Betriebsdaten der Elektrolysevorrichtung (1) abgespeichert sind.

2. Stabförmige Elektrolysevorrichtung (1) nach Anspruch 1
**dadurch gekennzeichnet,**
**dass** in dem Elektrodenraum (6) zwischen Gehäuse (2) und Elektrode (7) ein Dichtkörper (9) angeordnet ist, welcher sich über einen Teil des Aufnahmeraums (3) und/oder Elektrodenraumes (6) erstreckt.

3. Stabförmige Elektrolysevorrichtung (1) nach einem der Ansprüche 1 bis 2,
**dadurch gekennzeichnet,**
**dass** in dem Aufnahmeraum (3) zumindest ein Leuchtmittel (11) angeordnet ist und sich zumindest ein Lichtleiter (12) von dem Aufnahmeraum (3) in den Elektrodenraum (6) erstreckt, wobei der Lichtleiter (12) einenends derart in dem Aufnahmeraum (3) angeordnet ist, dass das von dem Leuchtmittel (11) abgestrahlte Licht in den Lichtleiter (12) eintritt.

4. Stabförmige Elektrolysevorrichtung (1) nach Anspruch 3,
**dadurch gekennzeichnet,**
**dass** das Leuchtmittel (11) eine Leuchtdiode ist, und/oder der Lichtleiter (12) zumindest eine Glasfaser oder zumindest ein Glasfaserbündel ist.

5. Stabförmige Elektrolysevorrichtung (1) nach Anspruch 3 oder 4,
**dadurch gekennzeichnet,**
**dass** der Lichtleiter (12) anderenends in den Elektrodenraum (6) bis zu der Öffnung (13) geführt ist.

6. Stabförmige Elektrolysevorrichtung (1) nach Anspruche 3, 4 oder 5,
**dadurch gekennzeichnet,**
**dass** sich der Lichtleiter (12) durch den Dichtkörper (9) erstreckt.

7. Stabförmige Elektrolysevorrichtung (1) nach einem der Ansprüche 1 bis 6,
**dadurch gekennzeichnet,**
**dass** die elektronische Steuereinheit (5) einen Zeitschalter aufweist, wobei ein Magnetfeldsensor vorhanden ist und der Zeitschalter durch ein externes Magnetfeld aktivierbar ist, und/oder wobei ein Bewegungssensor vorhanden ist und der Zeitschalter durch eine von dem Bewegungssensor detektierte Erschütterung des Gehäuses (2) aktivierbar ist.

8. Stabförmige Elektrolysevorrichtung (1) nach Anspruch 7,
**dadurch gekennzeichnet,**
**dass** in der Steuereinheit (5) ein Zeitschalter integriert ist, welcher durch wiederholtes Heranführen eines externen Magnetfeldes an das Gehäuse (2) oder durch eine wiederholte Erschütterung des Gehäuses (2) aktivierbar ist, wobei eine Zeitspanne als Vielfaches eines Zeitintervalls durch wiederholtes Heranführen eines externen Magnetfeldes an das Gehäuse und/oder durch eine wiederholte Erschütterung des Gehäuses festlegbar ist und das Vielfache gleich der Anzahl an Wiederholungen ist, wobei das Zeitintervall von der elektronischen Steuereinheit vorgegeben ist und die kürzeste Zeitspanne darstellt, in welchem Fall das Vielfache gleich Eins ist, und wobei die Elektrolyse anschließend während der sich aus dem Zeitintervall und dem Vielfachen ergebenden Zeitspanne stattfindet.

9. Stabförmige Elektrolysevorrichtung (1) nach einem der Ansprüche 1 bis 7,
**dadurch gekennzeichnet,**
**dass** die elektronische Steuereinheit (5) einen Strom- und Spannungsregler umfasst, mittels welchem die Spannung zwischen dem Gehäuse (2) und der Elektrode (7) und die zwischen beiden fließende Stromstärke auf unterschiedliche Werte einstellbar ist.

10. Stabförmige Elektrolysevorrichtung (1) nach Anspruch 9,
**dadurch gekennzeichnet,**
**dass** der Strom- und Spannungsregler einen schaltbaren MOSFET aufweist, mittels welchem die Stromstärke zwischen dem Gehäuse (2) und der Elektrode (7) einstellbar ist.

11. Stabförmige Elektrolysevorrichtung (1) nach einem der Ansprüche 1 bis 10,
**dadurch gekennzeichnet,**
**dass** die elektronische Steuereinheit (5) einen Mikroprozessor umfasst, welcher eine Berechnung des Leitwertes durchführt und abhängig von dem berechneten Leitwert die Spannung und die Stromstärke zwischen dem Gehäuse (2) und der Elektrode (7) einstellt.

12. Stabförmige Elektrolysevorrichtung (1) nach einem der Ansprüche 1 bis 11,
**dadurch gekennzeichnet,**
**dass** die Elektrolysevorrichtung (1) einen akustischen Signalgeber aufweist.

## Claims

1. Rod-shaped electrolysis device (1) with an electrically conductive housing (2), wherein in the housing (2), a receiving space (3) for at least one voltage source (4) in the form of an accumulator and an electronic control unit (5) are embodied, the receiving space (3) being separated in a liquid-tight manner from an electrode space (6) embodied in the housing (2), wherein an electrode (7) extends in the electrode space (6) and wherein at least one opening (13) is formed in the housing (2) in the region of the electrode space (6),
**characterized in**
**that** the housing (2) comprises a receiving socket (10) in a front face of the housing (2) which is electrically connected both with the housing (2) and with the electrode (7), wherein the electrode (7) and the receiving socket (10) are arranged in the lower region of the electrolysis device (1) and the rod-shaped electrode (7) has a hemispherical front face, wherein the electronic control unit (5) comprises a data memory, and the receiving socket (10) is electrically connected to the data memory such that the data memory may be read out via the receiving socket (10), operational data of the electrolysis device (1) being stored in the data memory.

2. Rod-shaped electrolysis device (1) according to claim 1,
**characterized in**
**that** in the electrode space (6) between the housing (2) and the electrode (7), a sealing body (9) is arranged which extends across a portion of the receiving space (3) and/or the electrode space (6).

3. Rod-shaped electrolysis device (1) according to one of claims 1 to 2,
**characterized in**
**that** within the receiving space (3), at least one lamp (11) is arranged and at least one light conductor (12) extends from the receiving space (3) into the electrode space (6), the light conductor (12) being arranged at one end within the receiving space (3) such that the light emitted from the lamp (11) enters the light conductor (12).

4. Rod-shaped electrolysis device (1) according to claim 3,
**characterized in**
**that** the lamp (11) is a light-emitting diode, and/or the light conductor (12) is at least a glass fibre or at least a glass fibre bundle.

5. Rod-shaped electrolysis device (1) according to claim 3 or 4,
**characterized in**
**that** the light conductor (12) is guided, at the other end, into the electrode space (6) to the opening (13).

6. Rod-shaped electrolysis device (1) according to claims 3, 4 or 5,
**characterized in**
**that** the light conductor (12) extends through the sealing body (9).

7. Rod-shaped electrolysis device (1) according to one of claims 1 to 6,
**characterized in**
**that** the electronic control unit (5) comprises a time switch, a magnetic field sensor being present and the time switch being activated by an external magnetic field, and/or a motion sensor being provided and the time switch being activated by a shock of the housing (1) detected by the motion sensor.

8. Rod-shaped electrolysis device (1) according to claim 7,
**characterized in**
**that** a time switch is integrated in the control unit (5) which is activatable by repeatedly approaching an external magnetic field to the housing (2) or by repeated shocks of the housing (2), wherein a term as a multiple of a time interval may be determined by repeatedly approaching an external magnetic field to the housing and/or by repeated shocks of the housing, the multiple being equal to the number of repetitions, wherein the time interval is predetermined by the electronic control unit and represents the shortest term in which case the multiple is equal to one, and wherein the electrolysis subsequently takes place during the term resulting from the time interval and the multiple.

9. Rod-shaped electrolysis device (1) according to one of claims 1 to 7,
**characterized in**
**that** the electronic control unit (5) comprises a current and voltage regulator by means of which the voltage between the housing (2) and the electrode (7) and the intensity of current flowing between them may be adjusted to different values.

10. Rod-shaped electrolysis device (1) according to claim 9,
**characterized in**
**that** the current and voltage regulator comprises a switchable MOSFET by means of which the intensity of current between the housing (2) and the electrode (7) may be adjusted.

11. Rod-shaped electrolysis device (1) according to one of claims 1 to 10,
**characterized in**
**that** the electronic control unit (5) comprises a microprocessor which performs a calculation of the conductance and adjusts, depending on the calculated conductance, the voltage and the intensity of current between the housing (2) and the electrode (7).

12. Rod-shaped electrolysis device (1) according to one of claims 1 to 11,
**characterized in**
**that** the electrolysis device (1) comprises an acoustic signal transmitter.

## Revendications

1. Dispositif d'électrolyse (1) en forme de tige doté d'un boîtier (2) électriquement conducteur, un espace de réception (3) pour au moins une source de tension (4) sous la forme d'un accumulateur et une unité de commande (5) électronique étant formé dans le boîtier (2), ledit espace de réception étant séparé de manière étanche aux liquides d'un espace à électrode (6) formé dans le boîtier (2), une électrode (7) s'étendant dans l'espace à électrode (6) et au moins une ouverture (13) étant formée dans le boîtier (2) dans la zone de l'espace à électrode (6),
**caractérisé en ce**
**que** le boîtier (2) comporte une douille de réception (10) dans une face frontale du boîtier (2), qui est reliée électriquement aussi bien au boîtier (2) qu'à l'électrode (7), l'électrode (7) et la douille de réception (10) étant disposées dans la zone inférieure du dispositif d'électrolyse (1) et l'électrode (7) en forme de tige comportant une face frontale hémisphérique, l'unité de commande (5) électronique comprenant une mémoire de données et la douille de réception (10) étant reliée électriquement à la mémoire de données de telle manière que la mémoire de données peut être lue par le biais de la douille de réception (10), des données de fonctionnement du dispositif d'électrolyse (1) étant enregistrées dans la mémoire de données.

2. Dispositif d'électrolyse (1) en forme de tige selon la revendication 1,
**caractérisé en ce**
**que** dans l'espace à électrode (6), entre le boîtier (2) et l'électrode (7), se trouve un corps d'étanchéité (9), qui s'étend sur une partie de l'espace de réception (3) et/ou de l'espace à électrode (6).

3. Dispositif d'électrolyse (1) en forme de tige selon l'une des revendications 1 et 2,
**caractérisé en ce**
**qu'**au moins un moyen d'éclairage (11) est disposé dans l'espace de réception (3) et au moins un conducteur optique (12) s'étend dans l'espace à électrode (6) depuis l'espace de réception (3), le conducteur optique (12) étant disposé, à une extrémité, dans l'espace de réception (3) de telle manière que la lumière émise par le moyen d'éclairage (11) entre dans le conducteur optique (12).

4. Dispositif d'électrolyse (1) en forme de tige selon la revendication 3,
**caractérisé en ce**
**que** le moyen d'éclairage (11) est une diode électroluminescente, et/ou le conducteur optique (12) est au moins une fibre optique ou au moins un faisceau de fibres optiques.

5. Dispositif d'électrolyse (1) en forme de tige selon la revendication 3 ou 4,
**caractérisé en ce**
**que** le conducteur optique (12) est guidé, à l'autre extrémité, dans l'espace à électrode (6) jusqu'à l'ouverture (13).

6. Dispositif d'électrolyse (1) en forme de tige selon la revendication 3, 4 ou 5,
**caractérisé en ce**
**que** le conducteur optique (12) traverse le corps d'étanchéité (9).

7. Dispositif d'électrolyse (1) en forme de tige selon l'une des revendications 1 à 6,
**caractérisé en ce**
**que** l'unité de commande (5) électronique comporte un interrupteur à minuterie, un capteur de champ magnétique étant présent et l'interrupteur à minuterie pouvant être activé par un champ magnétique extérieur, et/ou un capteur de déplacement étant présent et l'interrupteur à minuterie pouvant être activé par une secousse du boîtier (2) détectée par le capteur de déplacement.

8. Dispositif d'électrolyse (1) en forme de tige selon la revendication 7,
**caractérisé en ce**
**qu'**un interrupteur à minuterie est intégré dans l'unité de commande (5), lequel peut être activé en amenant de manière répétée un champ magnétique extérieur à proximité du boîtier (2) ou par une secousse répétée du boîtier (2), un laps de temps pouvant être défini comme le multiple d'un intervalle de temps en amenant de manière répétée un champ magnétique extérieur à proximité du boîtier et/ou par une secousse répétée du boîtier et le multiple étant égal au nombre de répétitions, l'intervalle de temps étant prédéterminé par l'unité de commande électronique et représentant le laps de temps le plus court, auquel cas le multiple est égal à un, et l'électrolyse se produisant ensuite pendant le laps de temps résultant
de l'intervalle de temps et du multiple.

9. Dispositif d'électrolyse (1) en forme de tige selon l'une des revendications 1 à 7,
**caractérisé en ce**
**que** l'unité de commande (5) électronique comprend un régulateur de courant et de tension, au moyen duquel la tension entre le boîtier (2) et l'électrode (7) et l'intensité du courant circulant entre les deux peuvent être réglées sur différentes valeurs.

10. Dispositif d'électrolyse (1) en forme de tige selon la revendication 9,
**caractérisé en ce**
**que** le régulateur de courant et de tension comporte un MOSFET connectable, au moyen duquel l'intensité du courant entre le boîtier (2) et l'électrode (7) peut être réglée.

11. Dispositif d'électrolyse (1) en forme de tige selon l'une des revendications 1 à 10,
**caractérisé en ce**
**que** l'unité de commande (5) électronique comprend un microprocesseur, qui effectue un calcul de la conductance et règle la tension et l'intensité du courant entre le boîtier (2) et l'électrode (7) en fonction de la conductance calculée.

12. Dispositif d'électrolyse (1) en forme de tige selon l'une des revendications 1 à 11,
**caractérisé en ce**
**que** le dispositif d'électrolyse (1) comporte un émetteur de signaux acoustiques.
